# DEMANDE DE BREVET EUROPEEN

(11) **EP 2 775 439 A1**
(43) Date de publication de la demande: **10.09.2014**
(21) Numéro de dépôt: 13305248.0
(22) Date de dépôt: 05.03.2013
(51) Int. Cl.: G06Q 20/34

(54) **Procédé de transfert d'unités de valeur entre deux cartes à puce**

(71) Demandeur: Gemalto SA, 92190 Meudon (FR)
(72) Inventeur: Chen, Yuexi, 13705 La Ciotat (FR)

(57) **Abrégé**

L'invention concerne un procédé de transfert d'unités de valeur d'une première carte à puce (10) vers une seconde carte à puce (11), les cartes à puce (10, 11) comprenant chacune un identifiant de leur titulaire ou une clé partagée.

Selon l'invention, le procédé consiste à :
a- Associer la première carte à puce (10) avec un appareil (18) ;
b- Chiffrer les unités de valeur de la première carte à puce (10) par l'identifiant de la première carte à puce (10) ou la clé partagée et stocker les unités de valeur chiffrées dans l'appareil (18) ;
c- Associer la seconde carte à puce (11) avec l'appareil (18) ;
d- Déchiffrer les unités de valeur dans la seconde carte à puce (11) avec l'identifiant de la seconde carte à puce (11) ou la clé partagée;
e- Stocker les unités de valeur dans la seconde carte à puce (11).

## Description

Le domaine de l'invention est celui des transactions financières et concerne plus précisément un procédé de transfert d'unités de valeur entre deux cartes à puce.

Un paiement électronique par carte bancaire s'effectue classiquement par insertion d'une carte bancaire de son titulaire (client) dans un terminal de paiement d'un commerçant. Après avoir entré le code PIN de la carte dans le terminal de paiement, la transaction s'effectue automatiquement.

La carte bancaire peut être de type à contact ou sans contact (par exemple de type NFC).

Lors de la transaction, dite EMV pour « Europay Mastercard Visa », un standard international de sécurité de transaction bancaire, le commerçant peut charger des unités de valeur dans la carte de son client. Ces unités de valeur sont par exemple des bons de réduction, des coupons ou des points de fidélité. Le client peut utiliser ces unités de valeur lors d'une prochaine visite chez ce commerçant (ou dans la même enseigne commerciale).

Une carte bancaire peut de ce fait comprendre de nombreuses unités de valeur à utiliser chez des commerçants différents.

Un problème se pose lorsque cette carte bancaire doit être remplacée, par exemple lorsqu'elle arrive à expiration. Si son utilisateur n'a pas utilisé toutes les unités de valeur présentes sur sa carte, celles-ci seront perdues car la date de validité de sa carte aura été atteinte. Une solution pour l'utilisateur consiste à se rendre auprès de chaque commerçant qui aura chargé des unités de valeur sur la carte et de lui demander de transférer ces unités de valeur sur la carte qui la remplace (nouvelle carte bancaire remplaçant l'ancienne). Cette solution n'est cependant pas pratique pour l'utilisateur car elle nécessite son déplacement et il risque également d'avoir oublié quels commerçants ont chargé des unités de valeur sur sa carte.

La présente invention a notamment pour objectif de remédier à cet inconvénient.

Plus précisément, un des objectifs de l'invention est de permettre à un détenteur d'une carte de paiement de transférer facilement les unités de valeur présentes sur son ancienne carte vers sa nouvelle carte, et ce en toute sécurité.

Cet objectif, ainsi que d'autres qui apparaîtront par la suite, est atteint grâce à un procédé de transfert d'unités de valeur d'une première carte à puce vers une seconde carte à puce, les cartes à puce comprenant chacune un identifiant de leur titulaire ou une clé partagée, **caractérisé en ce qu'il** consiste à :
a- Associer la première carte à puce avec un appareil ,
b- Chiffrer les unités de valeur de la première carte à puce par l'identifiant de la première carte à puce ou la clé partagée et stocker les unités de valeur chiffrées dans l'appareil ;
c- Associer la seconde carte à puce avec l'appareil ;
d- Déchiffrer les unités de valeur dans la seconde carte à puce avec l'identifiant de la seconde carte à puce ou sa clé partagée ;
e- Stocker les unités de valeur dans la seconde carte à puce.

Avantageusement, les cartes à puce sont des cartes bancaires, par exemple de type EMV.

Préférentiellement, le procédé consiste également à signer les unités de valeur de la première carte à puce.

Les unités de valeur sont avantageusement stockées sur la première carte à puce par des commerçants lors de transactions bancaires effectuées à l'aide de la première carte à puce.

L'appareil est, dans un premier mode de mise en oeuvre, un ordinateur.

Dans un deuxième mode de mise en oeuvre, l'appareil est un distributeur de billets.

Préférentiellement, le procédé selon l'invention consiste également à supprimer les unités de valeur dans la première carte à puce après l'étape b.

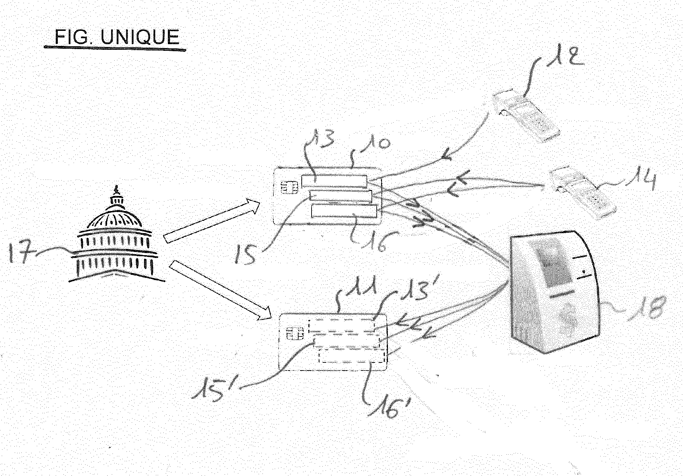

D'autres caractéristiques et avantages de l'invention apparaîtront à la lecture de la description suivante d'un mode de mise en oeuvre de l'invention, donné à titre illustratif et non limitatif, et de la figure unique annexée qui représente le transfert d'unités de valeur présentes sur une carte de paiement vers une autre carte de paiement. Ces cartes seront pas la suite appelées respectivement première et seconde cartes de paiement et correspondent respectivement à l'ancienne et à la nouvelle carte de leur titulaire.

Deux cartes 10 et 11 sont représentées. La carte 10 est appelée la première carte et la carte 11 est appelée la seconde carte. La première carte 10 est celle utilisée couramment par son titulaire. A titre illustratif, pour le paiement d'une prestation ou d'un produit auprès d'un premier commerçant A, l'utilisateur insère sa carte 10 dans un terminal de paiement 12 de ce commerçant. Des unités de valeur, telles que des bons de réduction, des coupons ou des points de fidélité, sont chargées dans une mémoire 13 dédiée à ce commerçant A. Par exemple, des points de fidélité sont stockés dans la mémoire 13 de la carte à puce 10. De même, lors d'un achat effectué chez un second commerçant B, l'utilisateur insère sa carte 10 dans un terminal de paiement 14 de ce second commerçant B. Pendant l'exécution du paiement, des points de fidélité sont stockés dans une mémoire 15 de la carte à puce 10 et des coupons de réduction dans une mémoire 16.

La carte 10 a une date d'expiration et doit être remplacée par une autre carte 11 avant cette date d'expiration. Les deux cartes 10 et 11 ont été fournies à leur titulaire par une banque 17 et leurs puces contiennent toutes deux des identifiants identiques de leur titulaire, tels que par exemple le nom de leur titulaire, son prénom, etc... Elles peuvent également ou alternativement comprendre chacune une même clé partagée. L'invention propose d'exploiter ces identifiants identiques ou ces clés partagées afin de permettre un transfert des unités de valeur de la carte 10 vers la carte 11.

A cet effet, l'invention propose, après association de la première carte à puce 10 (contenant les unités de valeur à transférer) avec un appareil 18, de chiffrer ces unités de valeur avec un ou plusieurs des identifiants identiques dans les deux cartes 10, 11, et de stocker ces unités de valeur chiffrées dans l'appareil 18. Les identifiants identiques peuvent aussi être une clé partagée par les deux cartes.

On entend par « association », dans le cas d'une carte à puce à contact, le fait d'insérer la carte 10 dans l'appareil 18 ou, dans le cas d'une carte sans contact, par exemple de type NFC, le fait d'approcher la carte 10 de l'appareil 18 (effectuer un « tap »).

Cette association est réalisée par l'utilisateur de la carte 10.

L'appareil 18 est, dans un mode de réalisation préférentiel, un distributeur automatique de billets. L'utilisateur, afin de transférer ses unités de valeur, dans l'appareil 18, sélectionne préalablement une fonction de transfert d'unités de valeur, grâce à l'interface homme-machine de cet appareil, par exemple dans un menu déroulant ou par appui sur une touche dédiée.

L'appareil 18 peut également être constitué par un terminal de paiement d'un commerçant, par un ordinateur (avec lecteur de carte) comprenant un logiciel ad-hoc ou communiquant avec un site Web (par exemple celui d'une banque) permettant le transfert des unités de valeur comprises dans la carte 10.

Après stockage des unités de valeur chiffrées dans l'appareil 18, l'utilisateur associe sa seconde carte à puce 11 avec l'appareil 18. L'appareil 18 transfère alors ces unités de valeur à la seconde carte à puce 11. Cette dernière les déchiffre grâce aux identifiants (ou clé partagée) qu'elle contient et stocke les unités de valeur dans les mêmes champs 13', 15' et 16' que ceux qui existaient dans la carte 10.

On a ainsi réalisé un transfert des unités de valeur de la carte 10 vers la carte 11 en assurant que seul le titulaire de la carte 11 soit capable de récupérer ces unités de valeur. Le chiffrement des unités de valeur permet donc d'éviter qu'une personne mal intentionnée (qui aurait trouvé ou volé la carte 10) puisse transférer les unités de valeur de la carte 10 vers une autre carte. Le chiffrement permet également d'éviter qu'un appareil vulnérable à des attaques (typiquement un ordinateur personnel), contrairement à un distributeur de billets, soit piraté pour en lire des données confidentielles de l'utilisateur (n° de compte par exemple).

Les unités de valeur transférées peuvent également être le contenu d'un porte-monnaie électronique, par exemple de type Monéo.

Dans un mode de mise en oeuvre avancé, les unités de valeur de la première carte 10 sont également signées pour éviter des attaques pendant le transfert de la première carte vers l'appareil 18. La seconde carte 11 ou l'appareil 18 vérifie cette signature avant d'installer les unités de valeur sur cette seconde carte.

Préférentiellement, et notamment dans le cas où la première carte 10 n'a pas atteint sa date d'expiration, les unités de valeur transférées dans l'appareil 18 sont supprimées de cette carte 10 après le transfert dans l'appareil 18. Ceci évite une duplication des unités de valeur dans les deux cartes 10 et 11.

L'identifiant du titulaire peut également être remplacé par un code identifiant ce titulaire de manière univoque. Des schémas de chiffrement de type PKI ou à clé secrète peuvent également être mis en oeuvre.

## Revendications

1. Procédé de transfert d'unités de valeur d'une première carte à puce (10) vers une seconde carte à puce (11), lesdites cartes à puce (10, 11) comprenant chacune un identifiant de leur titulaire ou une clé partagée, **caractérisé en ce qu'il** consiste à :
a- Associer ladite première carte à puce (10) avec un appareil (18) ;
b- Chiffrer lesdites unités de valeur de ladite première carte à puce (10) par ledit identifiant ou ladite clé partagée de ladite première carte à puce (10) et stocker les unités de valeur chiffrées dans ledit appareil (18) ;
c- Associer ladite seconde carte à puce (11) avec ledit appareil (18) ;
d- Déchiffrer lesdites unités de valeur dans ladite seconde carte à puce (11) avec ledit identifiant ou ladite clé partagée de ladite seconde carte à puce (11) ;
e- Stocker lesdites unités de valeur dans ladite seconde carte à puce (11).

2. Procédé selon la revendication 1, **caractérisé en ce que** lesdites cartes à puce (10, 11) sont des cartes bancaires.

3. Procédé selon l'une des revendications 1 et 2, **caractérisé en ce que** lesdites cartes à puce (10, 11) sont des cartes bancaires EMV.

4. Procédé selon l'une des revendications 1 à 3, **caractérisé en ce qu'il** consiste à signer lesdites unités de valeur de ladite première carte à puce (10).

5. Procédé selon l'une des revendications 1 à 4, **caractérisé en ce que** lesdites unités de valeur sont stockées sur ladite première carte à puce (10) par des commerçants lors de transactions bancaires effectuées à l'aide de ladite première carte à puce (10).

6. Procédé selon l'une des revendications 1 à 5, **caractérisé en ce que** ledit appareil (18) est un ordinateur.

7. Procédé selon l'une des revendications 1 à 5, **caractérisé en ce que** ledit appareil (18) est un distributeur de billets.

8. Procédé selon l'une des revendications 1 à 7, **caractérisé en ce qu'il** consiste également à supprimer lesdites unités de valeur dans ladite première carte à puce (10) après l'étape b.
